# EUROPÄISCHE PATENTSCHRIFT

(11) **EP 0 494 397 B1**
(45) Veröffentlichungstag und Bekanntmachung des Hinweises auf die Patenterteilung: **08.03.1995**
(21) Anmeldenummer: 91121294.2
(22) Anmeldetag: 12.12.1991
(51) Int. Cl.: H02B 1/56

(54) **Gekapseltes elektrisches Schaltfeld**
Electrical metal-clad switchboard
Tableau de distribution électrique blindé

(30) Priorität: 10.01.1991 CH 54/91
(43) Veröffentlichungstag der Anmeldung: 15.07.1992
(73) Patentinhaber: GEC Alsthom T&D AG, 5036 Oberentfelden (CH)
(72) Erfinder: Wüthrich, Hans-Rudolf, CH-5036 Oberentfelden (CH)
(74) Vertreter: Patentanwälte Schaad, Balass, Menzl & Partner AG

(56) Entgegenhaltungen:
- DE-A- 3 617 231
- DE-U- 7 141 970
- DE-U- 8 915 141
- US-A- 2 362 798

## Beschreibung

Die Erfindung betrifft ein gekapseltes elektrisches Schaltfeld für Mittelspannung nach dem Oberbegriff des Anspruches 1.

Will man solche Schaltfelder mit hohem Nennstrom betreiben, so muss dem Abtransport der im Kontakt des Vakuumschalters erzeugten Wärme besondere Aufmerksamkeit geschenkt werden.

Beim bekannten Schaltfeld nach dem DE-GM 89 15 141 belegt der Luftverteilkanal die ganze Grundfläche des Vakuumschalters. Die Kühlluft wird von der Bedienungsseite her angezogen. Um zu verhindern, dass im Falle einer Lichtbogenstörung im Leistungsschalterraum das Bedienungspersonal durch rückwärts durch den Luftverteilkanal strömende heisse Gase gefährdet wird, ist im Luftverteilkanal eine Rückschlagklappe eingebaut. Diese Rückschlagklappe bedingt, dass der Luftverteilkanal mit gegen die Bedienungsseite hin zunehmender Höhe gebaut werden muss. Dadurch wird aber die Zugänglichkeit zum Kabelanschlussraum von vorne stark beeinträchtigt. Zudem ist die Sicherheit des Bedienungspersonals stark vom zuverlässigen Funktionieren der Rückschlagklappe abhängig.

Die Aufgabe der Erfindung besteht darin, eine Leistungsschalterbelüftung zu schaffen, die die Zugänglichkeit zum Kabelanschlussraum nicht beeinträchtigt, und die Sicherheit des Betriebspersonals im Falle einer Lichtbogenstörung im Leistungsschalterraum nicht vom richtigen Funktionieren einer Rückschlagklappe abhängig macht.

Dies gelingt erfindungsgemäss durch die kennzeichnenden Merkmale des Anspruches 1.

Durch das Anordnen von Ventilatoren wird bei einer Weiterentwicklung der Erfindung die Kühlwirkung auf die Unterbrecher verstärkt. In einer bevorzugten weiteren Ausgestaltung ist der Leistungsschalterraum oben mit einer Abdeckung mit einer Auslassöffnung versehen, in der ein Ventilator angeordnet ist. Ventilatoren können jedoch auch in den Zuluftkanälen angeordnet werden.

Vorteilhafterweise werden die Zuluftkanäle im weiteren Ausgestaltungen zwischen den Verbindungsleitern zu den Kabelendverschlüssen oder längs der Trennwände zum benachbarten Schaltfeld angeordnet und aus Isoliermaterial gefertigt.

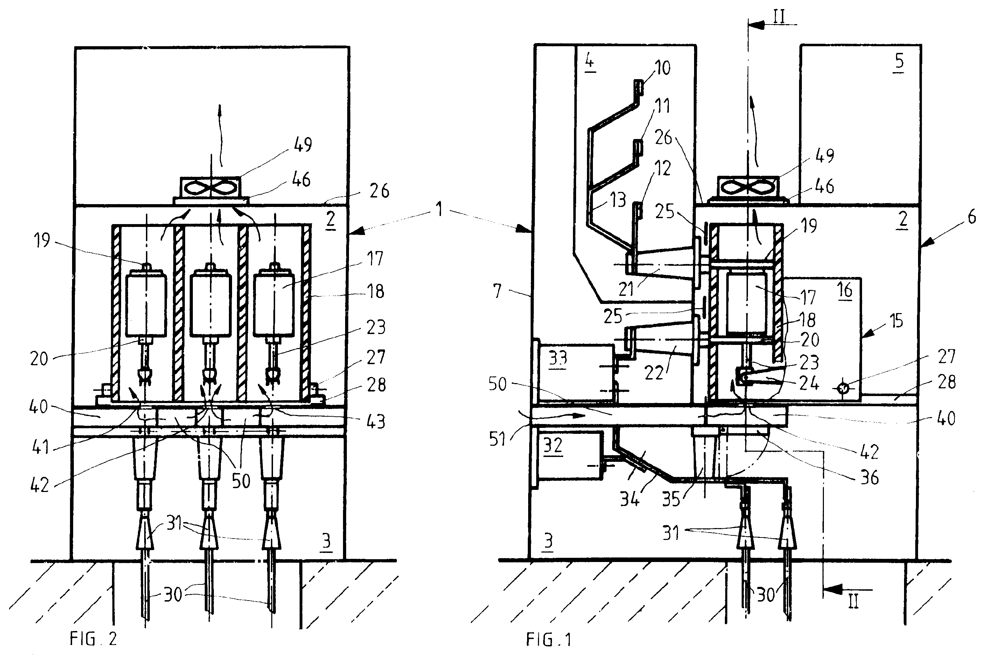

Anhand der Zeichnungen soll die Erfindung näher erläutert werden. Es zeigt Fig.1 einen vertikalen Schnitt durch ein erfindungsgemässes Schaltfeld in einer Ebene senkrecht zur Richtung der Sammelschienen, Fig.2 einen Schnitt gemäss der Linie II - II in Fig. 1 durch das gleiche Schaltfeld.

Das Schaltfeld 1 besteht aus einem Leistungsschalterraum 2, einem Kabelanschlussraum 3 und einem Sammelschienenraum 4. Diese Räume sind gegeneinander geschottet und erstrecken sich alle bis zur Oberseite des Schaltfeldes, wo Druckentlastungsklappen (nicht dargestellt) angebracht sind, die im Falle einer Lichtbogenstörung in einem der Räume den entsprechenden Raum vor dem durch den Störlichtbogen erzeugten Druck schützen. Ein über dem Leistungsschalterraum 2 auf der Bedienungsseite 6 angebrachter Niederspannungskasten 5 dient nicht nur zur Aufnahme der für den Betrieb des Schaltfeldes nötigen Mess-, Schutz- und Steuergeräte, sondern schützt das Betriebspersonal vor den im Falle einer Lichtbogenstörung austretenden heissen Gase. Im Sammelschienenraum 4 verlaufen senkrecht zur Zeichnungsebene von Fig.1 die Sammelschienen 10, 11, 12. Sie sind mittels Verbindungsleitern 13 mit Durchführungen 21 verbunden. Gleiche Durchführungen 22 befinden sich unterhalb davon im Kabelanschlussraum 3.

Im Leistungsschalterraum 2 ist ein Vakuumschalter 15 mittels Fahrrollen 27 auf Fahrschienen 28 verfahrbar angeordnet. Der Vakuumschalter 15 enthält drei Unterbrecher 17, die jede für sich in einem oben und unten offenen Isolierrohr 18 von rundem oder rechteckigem Querschnitt untergebracht sind. Die Isolierrohre 18 sind zusammen mit dem Rahmen des Schalterantriebs 16 einstückig aus Kunststoff gefertigt und bilden zugleich auch den Rahmen des Vakuumschalters. Der bewegliche Kontakt 23 wird über einen Antriebshebel 24 durch den Schalterantrieb 16 betätigt. Die Anschlussleiter 19, 20 dienen einerseits zur Halterung der Unterbrecher 17 in den Isolierrohren 18, anderseits verbinden sie die Vakuumschaltröhren mit in den Durchführungen 21, 22 sich befindenen (nicht dargestellten) Trennkontakten. Wird der Vakuumschalter 15 auf seinen Fahrrollen 27 zurückgezogen, trennen die Trennkontakte, und der Vakuumschalter 15 ist sowohl von den Sammelschienen 10, 11, 12 als auch vom Kabelabgang getrennt. Gleichzeitig schieben Sich Blenden 25 vor die Oeffnungen der Durchführungen 21, 22, die verhindern, dass die blanken feststehenden Kontaktstücke der Trennkontakte berührt werden können.

An den Durchführungen 22 sind im Kabelanschlussraum 3 über Verbindungsleiter 34, Stromwandler 33 und Spannungswandler 32 die Kabel 30 mittels Kabelendverschlüssen 31 angeschlossen. Stützisolatoren 35 stützen die Verbindungsleiter 34 ab und dienen zugleich als Träger für die Kontaktstücke eines Erdtrenners 36.

Quer unter den Unterbrechern 17 durch verläuft ein Luftverteilkanal 40. Dieser weist auf seiner Oberseite Auslassöffnungen 41, 42, 43 auf, die mit den Unterbrechern fluchten, wenn der Vakuumschalter in der Einfahrstellung ist.

Erfindungsgemäss münden in diesen Luftverteilkanal von hinten zwei Zuluftkanäle 50. Mit ihren Einlassöffnungen 51 durchdringen sie die Rückwand 7 der Schaltzelle. Die Zuluftkanäle sind zwischen den Verbindungsleitern 34 zu den Kabelendverschlüssen 31 angeordnet. Da sie aus Isoliermaterial gefertigt sind, müssen die Abstände zwischen zwei Verbindungsleitern 34 nicht grösser sein, als sie ohne die zusätzlichen Zuluftkanäle 50 wären.

Alternativ können die Zuluftkanäle jedoch auch längs der Trennwände zu den benachbarten Schaltfeldern angeordnet werden.

Ueber dem Leistungsschalterraum 2 ist eine Abdeckung 26 mit einer einzigen Auslassöffnung 46 angebracht. Die Abdeckung 26 überdeckt den ganzen Leistungsschalterraum 2, soweit er nicht durch den Niederspannungskasten 5 bereits abgedeckt ist. Vorzugsweise ist die Abdeckung 26 mit (nicht gezeigten) Druckentlastungsklappen versehen.

In die Auslassöffnung 46 ist ein Ventilator 49 eingelassen. Er sorgt für die zur Kühlung der Unterbrecher 17 notwendige Luftumwälzung, indem Luft durch die Zuluftkanäle 50, den Luftverteilkanal 40, seine Auslassöffnungen 41, 42, 43 und den freien Querschnitt zwischen den Unterbrechern 17 und den Isolierrohren 18 gesogen wird.

Dadurch, dass die Auslassöffnung 46 höher liegt als die Einlassöffnungen 51, entsteht eine kaminartige Wirkung, so dass eine Kühlluftströmung auch ohne die Hilfe des Ventilators zustandekommt. Wenn kein grosser Bedarf an Kühlluft da ist, kann deshalb auf den Ventilator verzichtet werden.

Alternativ oder in Ergänzung zum Ventilator 49, können auch in die Zuluftkanäle 50 Ventilatoren, vorzugsweise in der Nähe der Einlassöffnungen 51, eingebaut werden.

## Patentansprüche

1. Gekapseltes elektrisches Schaltfeld (1) für Mittelspannung mit folgenden Merkmalen:
- das Schaltfeld besteht aus je einem Sammelschienen-(4), Leistungsschalter- (2) und Kabelanschlussraum (3), sowie einem auf dem Leistungsschalterraum (2) aufgesetzen Niederspannungskasten (5),
- diese Räume sind gegeneinander geschottet,
- der Kabelanschlussraum (3) erstreckt sich unter dem Leistungsschalterraum (2) hindurch bis zur Bedienungsseite (6) des Schaltfeldes,
- die aufrecht stehenden Unterbrecher (17) des ausziehbaren Vakuumschalters (15) sind mit Abstand von Isolierrohren (18) umgeben, die oben und unten offen sind,
- unter den Unterbrechern (17) verläuft ein Luftverteilkanal (40), der gegen den Kabelanschlussraum (3) geschottet und oben mit Auslassöffnungen (41, 42, 43) versehen ist, die mit den Unterbrechern fluchten,
**dadurch gekennzeichnet,** dass in den Luftverteilkanal (40) von hinten Zuluftkanäle (50) münden, welche die Rückwand (7) des Schaltfeldes (1) durchdringen.

2. Gekapseltes elektrisches Schaltfeld nach Anspruch 1, **dadurch gekennzeichnet,** dass der Leistungsschalterraum (2) oben mit einer Abdeckung (26) mit einer Auslassöffnung (46) versehen ist, in der ein Ventilator (49) angeordnet ist.

3. Gekapseltes elektrisches Schaltfeld nach einem der Ansprüche 1 bis 2, **dadurch gekennzeichnet,** dass in den Zuluftkanälen (50) Ventilatoren angeordnet sind.

4. Gekapseltes elektrisches Schaltfeld nach einem der Ansprüche 1 bis 3, **dadurch gekennzeichnet,** dass die Zuluftkanäle (50) zwischen den Verbindungsleitern (34) zu den Kabelendverschlüssen 31 angeordnet sind.

5. Gekapseltes elektrisches Schaltfeld nach einem der Ansprüche 1 bis 3, **dadurch gekennzeichnet,** dass die Zuluftkanäle längs der Trennwände zu den benachbarten Schaltfeldern angeordnet sind.

6. Gekapseltes elektrisches Schaltfeld nach einem der Ansprüche 1 bis 5, **dadurch gekennzeichnet,** dass die Zuluftkanäle (50) aus Isoliermaterial gefertigt sind.

## Claims

1. Encapsulated electrical switch panel (1) for medium voltage having the following features:
- the switch panel consists in each case of a busbar area (4), a circuit breaker area (2) and a cable connection area (3), as well as a low-voltage box (5) fitted on top of the circuit breaker area (2),
- these areas are partitioned from one another,
- the cable connection area (3) extends under the circuit breaker area (2) up to the operating side (6) of the switch panel,
- the upright interrupters (17) of the withdrawable vacuum switch (15) are surrounded at a distance by insulating pipes (18) which are open at the top and bottom,
- an air distribution channel (40) runs under the interrupters (17), is partitioned from the cable connection area (3) and provided at the top with outlet openings (41, 42, 43) which are aligned with the interrupters,
characterized in that air feed channels (50), which penetrate the rear wall (7) of the switch panel (1), open into the air distribution channel (40) from behind.

2. Encapsulated electrical switch panel according to Claim 1, characterized in that the circuit breaker area (2) is provided at the top with a cover (26) having an outlet opening (46), in which a ventilator (49) is arranged.

3. Encapsulated electrical switch panel according to either of Claims 1 and 2, characterized in that ventilators are arranged in the air feed channels (50).

4. Encapsulated electrical switch panel according to one of Claims 1 to 3, characterized in that the air feed channels (50) are arranged between the connecting conductors (34) to the potheads (31).

5. Encapsulated electrical switch panel according to one of Claims 1 to 3, characterized in that the air feed channels are arranged along the partitions to the adjacent switch panels.

6. Encapsulated electrical switch panel according to one of Claims 1 to 5, characterized in that the air feed channels (50) are manufactured from insulating material.

## Revendications

1. Panneau de couplage électrique (1) blindé pour moyenne tension, ayant les particularités suivantes :
- le panneau de couplage se compose d'une chambre à barres collectrices (4), d'une chambre à disjoncteurs de puissance (2) et d'une chambre à câbles de connexion (3) ainsi que d'une boîte basse tension (5) reposant sur la chambre des disjoncteurs de puissance (2),
- ces chambres sont cloisonnées les unes par rapport aux autres,
- la chambre à câbles de connexion (3) est disposée sous la chambre des disjoncteurs de puissance (2) et se prolonge jusque sur le côté commande (6) du panneau de couplage,
- les disjoncteurs disposés debout (17) de l'interrupteur à vide sectionnable (15) sont entourés à distance de tubes isolants (18) qui sont ouverts au haut et au bas,
- un canal de distribution d'air (40) passant sous les disjoncteurs (17) est séparé par une cloison de la chambre des câbles de connexion (3) et comporte au haut des orifices de sortie (41, 42, 43) qui sont alignés sur les disjoncteurs,
caractérisé en ce que des canaux d'arrivée d'air (50) débouchent par l'arrière dans le canal de distribution d'air (40) et passent à travers la cloison arrière (7) du panneau de couplage (1).

2. Panneau de couplage électrique blindé selon la revendication 1, caractérisé en ce que la chambre des disjoncteurs de puissance (2) comporte à sa partie supérieure un élément de couverture (26) comportant un orifice de sortie (46) dans lequel un ventilateur (49) est disposé.

3. Panneau de couplage électrique blindé selon l'une des revendications 1 et 2, caractérisé en ce que des ventilateurs sont disposés dans les canaux d'arrivée d'air (50).

4. Panneau de couplage électrique blindé selon l'une des revendications 1 à 3, caractérisé en ce que les canaux d'arrivée d'air (50) sont disposés entre les conducteurs (34) de connexion aux boîtes d'extrémité de câble (31).

5. Panneau de couplage électrique blindé selon l'une des revendications 1 à 3, caractérisé en ce que les canaux d'arrivée d'air sont disposés le long des cloisons de séparation des panneaux de couplage voisins.

6. Panneau de couplage électrique blindé selon l'une des revendications 1 à 5, caractérisé en ce que les canaux d'arrivée d'air (50) sont réalisés en matériau isolant.
